# FASCICULE DE BREVET EUROPEEN

(11) **EP 3 709 100 B1**
(45) Date de publication et mention de la délivrance du brevet: **21.06.2023**
(21) Numéro de dépôt: 19162938.5
(22) Date de dépôt: 14.03.2019
(51) Int. Cl.: G04B 19/10, G04B 19/12, A44C 27/00, G04D 3/00, G02C 11/02

(54) **COMPOSANT D'HORLOGERIE OU DE BIJOUTERIE COMPOSITE AVEC PROTECTION DU SUBSTRAT ET DE SON DÉCOR**
VERBUNDKOMPONENTE EINES UHRWERKS ODER SCHMUCKSTÜCKS MIT SCHUTZ DES SUBSTRATS UND SEINEM DEKORELEMENT
COMPOSITE TIMEPIECE COMPONENT OR JEWELLERY ITEM WITH PROTECTION OF THE SUBSTRATE AND ITS DECORATION

(43) Date de publication de la demande: 16.09.2020
(73) Titulaire: Omega SA, 2502 Bienne (CH)
(72) Inventeur: JEANRENAUD, Frédéric, 2300 La Chaux-de-Fonds (CH); KISSLING, Gregory, 2520 La Neuveville (CH)
(74) Mandataire: ICB SA

(56) Documents cités:
- EP-A1- 3 067 150
- EP-A1- 3 320 799
- CH-A- 269 849
- DE-U- 6 601 730

## Description

### Domaine de l'invention

L'invention concerne un procédé de fabrication d'un composant d'horlogerie ou de bijouterie composite, comportant au moins un décor appliqué sur un substrat qui comporte au moins une surface d'aspect destinée à rester visible.

L'invention concerne encore une montre comportant un élément d'habillage ou/et un cadran réalisé par ce procédé.

L'invention concerne le domaine des composants d'habillage ou d'affichage pour l'horlogerie, et le domaine de la bijouterie.

### Arrière-plan de l'invention

La fabrication de certains composants d'horlogerie ou de bijouterie, comportant des composants ou des décors rapportés, est souvent délicate quand le matériau de base réagit à l'humidité ou à la température, ou à certains solvants.

C'est par exemple le cas de la nacre, ou d'autres matériaux d'origine animale, ou végétale comme du bois, qui nécessitent des précautions particulières pour leur équipement, leur décoration, ainsi que pour la protection dans le temps du substrat lui-même, ainsi que des décors que comportent ces composants.

Les documents CH 269849 et DE 6601730 U divulguent des procédés de réalisation d'un cadran de montre.

### Résumé de l'invention

L'invention se propose de mettre au point un procédé de fabrication d'un composant d'horlogerie ou de bijouterie composite, comportant au moins un décor appliqué sur un substrat qui comporte au moins une surface d'aspect destinée à rester visible, qui assure la tenue dans le temps du substrat et des décors rapportés.

A cet effet, l'invention concerne un procédé selon la revendication 1.

L'invention concerne encore une montre comportant un composant réalisé par ce procédé.

L'invention concerne encore un bijou comportant un composant réalisé par ce procédé.

### Description sommaire des dessins

D'autres caractéristiques et avantages de l'invention apparaîtront à la lecture de la description détaillée qui va suivre, en référence aux dessins annexés, où :

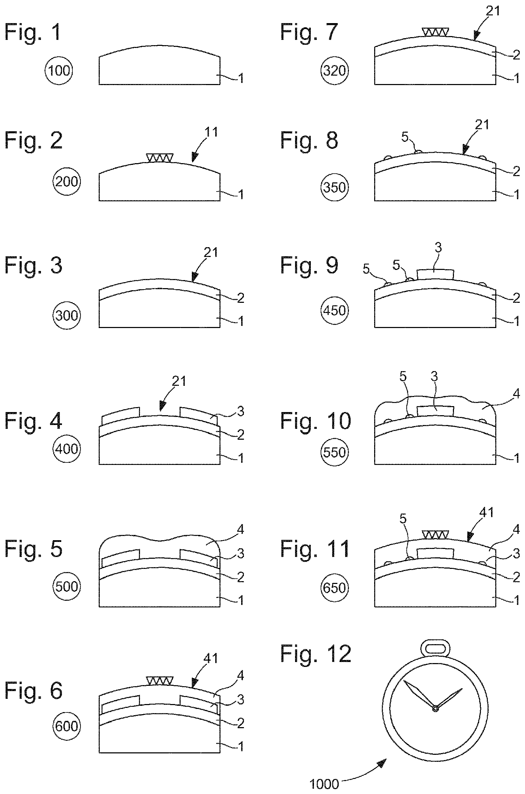

- les figures 1 à 11 représentent, de façon schématisée et en coupe, des séquences opératoires d'un procédé selon l'invention :
- la figure 1 représente la réalisation d'une embase ;
- la figure 2 représente un polissage miroir de chaque surface d'aspect de l'embase destinée à être vue par l'utilisateur;
- la figure 3 représente une première opération de recouvrement dans laquelle on recouvre chaque surface d'aspect polie par un dépôt d'une première couche transparente ou colorée semi-transparente d'un premier matériau par voie sèche ou procédé PVD ou CVD ou ALD ou laquage ou zaponnage ;
- la figure 4 représente une première opération de transfert par apposition et collage d'au moins un élément décoratif sur une première surface externe de la première couche;
- la figure 5 représente une deuxième opération de recouvrement dans laquelle on recouvre la première couche et chaque élément décoratif que porte la première couche par un dépôt d'une deuxième couche d'un matériau de traitement transparent par voie sèche ou procédé PVD ou CVD ou ALD ou laquage ou zaponnage;
- la figure 6 représente une opération finale d'usinage où on effectue un usinage de mise en géométrie de la deuxième couche et/ou un polissage de la deuxième surface externe de la deuxième couche ;
- la figure 7 représente, après la première opération de recouvrement, une opération intermédiaire d'usinage dans laquelle on effectue un usinage de mise en géométrie de la première couche et/ou un polissage de la première surface externe de la première couche ;
- la figure 8 représente, avant l'exécution de la deuxième opération de recouvrement, une opération de décalquage lors de laquelle on applique par tampographie au moins un marquage sur la première surface externe de la première couche ;
- la figure 9 représente une variante où on applique à la fois l'apposition et le collage d'au moins un élément décoratif, et le décalquage par tampographie d'au moins un marquage, sur une première surface externe de la première couche ;
- la figure 10 représente, de façon similaire à la figure 5, une deuxième opération de recouvrement dans laquelle on recouvre la première couche et chaque élément décoratif, rapporté selon la figure 9, par un dépôt d'une deuxième couche d'un matériau de traitement transparent par voie sèche ou procédé PVD ou CVD ou ALD ou laquage ou zaponnage;
- la figure 11 représente, de façon similaire à la figure 6, une opération finale d'usinage où on effectue un usinage de mise en géométrie de la deuxième couche de l'ébauche de la figure 10, et/ou un polissage de la deuxième surface externe de cette deuxième couche ;
- la figure 12 représente une montre comportant un cadran réalisé et décoré par le procédé selon l'invention.

### Description détaillée des modes de réalisation préférés

L'invention concerne un procédé de fabrication d'un composant d'horlogerie ou de bijouterie composite, selon la revendication 1 annexée.

Selon une caractéristique particulière, après la deuxième opération de recouvrement 500, dans une opération finale d'usinage 600 on effectue un usinage de mise en géométrie de la deuxième couche 4 et/ou un polissage de la deuxième surface externe 41 que comporte la deuxième couche 4.

Selon une caractéristique particulière, après la première opération de recouvrement 300, on effectue une opération intermédiaire d'usinage 320 dans laquelle on effectue un usinage de mise en géométrie de la première couche 2 et/ou un polissage de la première surface externe 21 que comporte la première couche 2.

Selon une caractéristique particulière, avant l'exécution de la deuxième opération de recouvrement 500, on effectue une opération de décalquage 350 lors de laquelle on applique par tampographie au moins un marquage 5 sur la première surface externe 21 de la première couche 2.

Selon une caractéristique particulière, lors de l'opération intermédiaire d'usinage 320 on réalise au moins une partie de la première surface externe 21 que comporte la première couche 2 selon une surface gauche avec un galbe particulier, et, avant d'effectuer la première opération de transfert 400, on réalise un support sacrificiel gauche correspondant au galbe particulier sur lequel on appose avec une fixation adhésive au moins un élément décoratif 3. Plus particulièrement, lors de l'opération initiale 100 on réalise l'embase 1 avec des éléments de repérage géométriques, et on réalise le support sacrificiel gauche avec des éléments de repérage complémentaire par rapport aux éléments de repérage de l'embase 1 pour leur positionnement relatif exact avant le collage de chaque élément décoratif 3 porté par le support sacrificiel.

Selon une caractéristique particulière, lors de l'opération initiale 100 on réalise l'embase 1 avec au moins une surface de réception usinée pour la réception d'au moins un élément décoratif 3 ou d'un marquage 5. Cette surface de réception peut être une surface saillante par rapport à l'embase 1, ou bien une surface rentrante, comme un lamage, une rainure, ou une gorge, qui permet aussi le positionnement et l'insertion de composants mécaniques rapportés comme des appliques ou index ou autres.

Selon une caractéristique particulière, lors de l'opération initiale 100 on réalise l'embase 1 avec au moins un logement creusé pour la réception d'une couche intermédiaire de décor dans un matériau coloré autre que le matériau de l'embase 1.

Selon une caractéristique particulière, lors de l'opération intermédiaire d'usinage 320 on réalise dans la première couche 2 au moins un logement creusé pour la réception d'au moins un élément décoratif 3 ou pour la réception d'une couche intermédiaire de décor dans un matériau coloré autre que le matériau de l'embase 1 et/ou que le matériau de la première couche 2.

Selon une caractéristique particulière, entre la première opération de recouvrement 300 et la deuxième opération de recouvrement 500, on effectue au moins une opération de recouvrement intermédiaire lors de laquelle on dépose ou on appose, dans au moins un logement, un décor intermédiaire dans un matériau coloré autre que le matériau de l'embase 1 et/ou que le matériau de la première couche 2. Plus particulièrement, on effectue l'opération de recouvrement intermédiaire par dépôt d'une couche intermédiaire du matériau coloré, et on procède ensuite à une opération d'usinage et/ou de polissage pour délimiter la couche intermédiaire uniquement au niveau de chaque logement dans laquelle la couche intermédiaire est déposée.

Selon une caractéristique particulière, on choisit un vernis acrylique ou époxyde comme matériau de la deuxième couche 4.

Selon une caractéristique particulière, lors de l'opération initiale 100 on choisit le substrat en nacre, qui peut être de la nacre naturelle, ou de la nacre artificielle.

Selon une caractéristique particulière, lors de l'opération initiale 100 on choisit le substrat en céramique.

Selon une caractéristique particulière, on fabrique le composant horloger pour former un élément d'habillage ou un cadran.

L'invention concerne encore une montre 1000 comportant au moins un composant horloger réalisé par le procédé. L'invention concerne encore un bijou comportant au moins un composant réalisé par le procédé.

Naturellement, l'invention est avantageuse, non seulement pour des composants d'horlogerie, mais aussi pour des bijoux ou des composants de bijouterie, voire de lunetterie ou d'articles de mode.

## Revendications

1. Procédé de fabrication d'un composant d'horlogerie ou de bijouterie composite, comportant au moins un décor appliqué sur un substrat qui comporte au moins une surface d'aspect destinée à rester visible, ledit procédé comprenant, dans cet ordre, les opérations suivantes
- dans une opération initiale (100) on réalise une embase (1) dans un substrat qui comporte au moins une surface d'aspect (11) destinée à rester visible
- dans une première opération de polissage (200) on effectue un polissage miroir de chaque dite surface d'aspect (11) destinée à être vue par l'utilisateur ;
- on effectue une première opération de recouvrement (300) dans laquelle on recouvre chaque dite surface d'aspect (11) polie que comporte ladite embase (1) par un dépôt d'une première couche (2) transparente ou colorée semi-transparente d'un premier matériau (5) par voie sèche ou procédé PVD ou CVD ou ALD ou laquage ou zaponnage
- on effectue une première opération de transfert (400) par apposition et collage d'au moins un élément décoratif (3) sur une première surface externe (21) que comporte ladite première couche (2);
- on effectue une deuxième opération de recouvrement (500) dans laquelle on recouvre ladite première couche (2) et chaque dit élément décoratif (3) que porte ladite première couche (2) par un dépôt d'une deuxième couche (4) d'un matériau de traitement transparent par voie sèche ou procédé PVD ou CVD ou ALD ou laquage ou zaponnage, ledit procédé de fabrication étant **caractérisé en ce que** lors de ladite opération initiale (100) on réalise au moins une surface d'aspect (11) selon une surface gauche avec un galbe particulier, et **en ce que**, avant d'effectuer ladite première opération de transfert (400), on réalise un support sacrificiel gauche correspondant audit galbe particulier sur lequel on appose avec une fixation adhésive au moins un dit élément décoratif (3).

2. Procédé selon la revendication 1, **caractérisé en ce que**, après ladite deuxième opération de recouvrement (500), dans une opération finale d'usinage (600) on effectue un usinage de mise en géométrie de ladite deuxième couche (4) et/ou un polissage de la deuxième surface externe (41) que comporte ladite deuxième couche (4).

3. Procédé selon la revendication 1 ou 2, **caractérisé en ce que**, après ladite première opération de recouvrement (300), on effectue une opération intermédiaire d'usinage (320) dans laquelle on effectue un usinage de mise en géométrie de ladite première couche (2) et/ou un polissage de la première surface externe (21) que comporte ladite première couche (2).

4. Procédé selon l'une des revendications 1 à 3, **caractérisé en ce que**, avant l'exécution de ladite deuxième opération de recouvrement (500), on effectue une opération de décalquage (350) lors de laquelle on applique par tampographie au moins un marquage (5) sur ladite première surface externe (21) de ladite première couche (2).

5. Procédé selon la revendication 3 et selon l'une des revendications 1 à 4, **caractérisé en ce que**, lors de ladite opération intermédiaire d'usinage (320) on réalise au moins une partie de ladite première surface externe (21) que comporte ladite première couche (2) selon une surface gauche avec un galbe particulier, et **en ce que**, avant d'effectuer ladite première opération de transfert (400), on réalise un support sacrificiel gauche correspondant audit galbe particulier sur lequel on appose avec une fixation adhésive au moins un dit élément décoratif (3).

6. Procédé selon la revendication 1 à 6, **caractérisé en ce que**, lors de ladite opération initiale (100) on réalise ladite embase (1) avec des éléments de repérage, et **en ce qu'**on réalise ledit support sacrificiel gauche avec des éléments de repérage complémentaire par rapport auxdits éléments de repérage de ladite embase (1) pour leur positionnement relatif exact avant le collage de chaque dit élément décoratif (3) porté par ledit support sacrificiel.

7. Procédé selon l'une des revendications 1 à 6, **caractérisé en ce que**, lors de ladite opération initiale (100) on réalise ladite embase (1) avec au moins une surface de réception usinée pour la réception d'au moins un dit élément décoratif (3) ou d'un marquage (5).

8. Procédé selon l'une des revendications 1 à 7, **caractérisé en ce que**, lors de ladite opération initiale (100) on réalise ladite embase (1) avec au moins un logement creusé pour la réception d'une couche intermédiaire de décor dans un matériau coloré autre que le matériau de ladite embase (1).

9. Procédé selon la revendication 3 et selon l'une des revendications 1 à 8, **caractérisé en ce que**, lors de ladite opération intermédiaire d'usinage (320) on réalise dans ladite première couche (2) au moins un logement creusé pour la réception d'au moins un dit élément décoratif (3) ou pour la réception d'une couche intermédiaire de décor dans un matériau coloré autre que le matériau de ladite embase (1) et/ou que le matériau de ladite première couche (2).

10. Procédé selon la revendication 8 ou 9, **caractérisé en ce que**, entre ladite première opération de recouvrement (300) et ladite deuxième opération de recouvrement (500), on effectue au moins une opération de recouvrement intermédiaire lors de laquelle on dépose ou on appose, dans au moins un dit logement, un décor intermédiaire dans un matériau coloré autre que le matériau de ladite embase (1) et/ou que le matériau de ladite première couche (2).

11. Procédé selon la revendication 10, **caractérisé en ce qu'**on effectue ladite opération de recouvrement intermédiaire par dépôt d'une couche intermédiaire dudit matériau coloré, et **en ce qu'**on procède ensuite à une opération d'usinage et/ou de polissage pour délimiter ladite couche intermédiaire uniquement au niveau de chaque dit logement dans laquelle ladite couche intermédiaire est déposée.

12. Procédé selon l'une des revendications 1 à 11, **caractérisé en ce qu'**on choisit un vernis acrylique ou époxyde comme matériau de ladite deuxième couche (4).

13. Procédé selon l'une des revendications 1 à 12, **caractérisé en ce que**, lors de ladite opération initiale (100) on choisit ledit substrat en nacre.

14. Procédé selon l'une des revendications 1 à 12, **caractérisé en ce que**, lors de ladite opération initiale (100) on choisit ledit substrat en céramique.

15. Procédé selon l'une des revendications 1 à 14, **caractérisé en ce qu'**on fabrique ledit composant horloger pour former un élément d'habillage ou un cadran.

16. Montre (1000) comportant au moins un composant horloger réalisé par le procédé selon l'une des revendications 1 à 15.

## Patentansprüche

1. Verfahren zur Herstellung einer Verbundkomponente eines Uhrwerks oder Schmuckstücks, die mindestens eine Verzierung beinhaltet, die auf ein Substrat aufgetragen ist, das mindestens eine Oberfläche mit einem Erscheinungsbild beinhaltet, welche dazu bestimmt ist sichtbar zu bleiben, wobei das Verfahren in dieser Reihenfolge die folgenden Vorgänge umfasst:
- in einem anfänglichen Vorgang (100) wird eine Grundplatte (1) in einem Substrat gefertigt, das mindestens eine Oberfläche mit Erscheinungsbild (11) beinhaltet, welche dazu bestimmt ist, sichtbar zu bleiben;
- in einem ersten Poliervorgang (200) wird ein Spiegelpolieren einer jeden Oberfläche mit Erscheinungsbild (11) durchgeführt, welche dazu bestimmt ist, vom Benutzer gesehen zu werden;
- ein erster Abdeckungsvorgang (300) wird durchgeführt, bei dem jede polierte Oberfläche mit Erscheinungsbild (11), welche die Grundplatte beinhaltet, durch ein Beschichten mit einer ersten transparenten oder halbtransparenten farbigen Schicht (2) aus einem ersten Material (5) im Trockenverfahren oder PVD- oder CVD- oder ALD-Verfahren oder Lackieren oder Zaponnieren bedeckt wird;
- ein erster Transfervorgang (400) durch Aufdrucken und Kleben mindestens eines Dekorelements (3) auf einer ersten äußeren Oberfläche (21), welche die erste Schicht (2) beinhaltet, durchgeführt wird;
- ein zweiter Abdeckungsvorgang (500) durchgeführt wird, bei dem die erste Schicht (2) und jedes Dekorelement (3), welches die erste Schicht trägt, durch Beschichten mit einer zweiten Schicht (4) aus einem transparenten Behandlungsmaterial im Trockenverfahren oder PVD- oder CVD- oder ALD-Verfahren oder Lackieren oder Zaponnieren bedeckt wird, wobei das Verfahren zur Herstellung **dadurch gekennzeichnet ist, dass** bei dem anfänglichen Vorgang (100) mindestens eine Oberfläche mit Erscheinungsbild (11) entlang einer linken Oberfläche mit einer besonderen Rundung gefertigt wird, und dadurch, dass vor dem Durchführen des ersten Transfervorgangs (400) eine linke Opferstütze gefertigt wird, welche der besonderen Rundung entspricht, auf der mit einer Klebstoffbefestigung mindestens ein Dekorelement (3) aufgebracht wird.

2. Verfahren nach Anspruch 1, **dadurch gekennzeichnet, dass** nach dem zweiten Abdeckungsvorgang (500) in einem Endbearbeitungsvorgang (600) eine Bearbeitung zur Ausrichtung der zweiten Schicht (4) und/oder ein Polieren der zweiten äußeren Oberfläche (41), welche die zweite Schicht (4) beinhaltet, durchgeführt wird.

3. Verfahren nach Anspruch 1 oder 2, **dadurch gekennzeichnet, dass** nach dem ersten Abdeckungsvorgang (300) ein Zwischenbearbeitungsvorgang (320) durchgeführt wird, bei dem eine Bearbeitung zur Ausrichtung der ersten Schicht (2) und/oder ein Polieren der ersten äußeren Oberfläche (21), welche die erste Schicht (2) beinhaltet, durchgeführt wird.

4. Verfahren nach einem der Ansprüche 1 bis 3, **dadurch gekennzeichnet, dass** vor Ausführung des zweiten Abdeckungsvorgangs (500) ein Stempelvorgang (350) durchgeführt wird, bei dem durch Tampondruck mindestens eine Markierung (5) auf der ersten äußeren Oberfläche (21) der ersten Schicht (2) aufgetragen wird.

5. Verfahren nach Anspruch 3, und nach einem der Ansprüche 1 bis 4, **dadurch gekennzeichnet, dass** beim Zwischenbearbeitungsschritt (320) mindestens ein Teil der ersten äußeren Oberfläche (21), welche die erste Schicht (2) beinhaltet, entlang einer linken Oberfläche mit einer besonderen Rundung gefertigt wird, und dadurch, dass vor dem Durchführen des ersten Transfervorgangs (400) eine linke Opferstütze gefertigt wird, welche der besonderen Rundung entspricht, auf der mit einer Klebstoffbefestigung mindestens ein Dekorelement (3) aufgebracht wird.

6. Verfahren nach Anspruch 1 bis 6, **dadurch gekennzeichnet, dass** bei dem anfänglichen Vorgang (100) die Grundplatte (1) mit Identifizierungselementen gefertigt wird, und dadurch, dass die linke Opferstütze mit Identifizierungselementen ergänzend zu den Identifizierungselementen der Grundplatte (1) für deren exakte Positionierung zueinander vor dem Kleben eines jeden Dekorelements (3), welches von der Opferstütze getragen wird, gefertigt wird.

7. Verfahren nach einem der Ansprüche 1 bis 6, **dadurch gekennzeichnet, dass** bei dem anfänglichen Vorgang (100) die Grundplatte (1) mit mindestens einer Aufnahmeoberfläche gefertigt wird, die zur Aufnahme mindestens eines Dekorelements (3) oder einer Markierung (5) bearbeitet wird.

8. Verfahren nach einem der Ansprüche 1 bis 7, **dadurch gekennzeichnet, dass** bei dem anfänglichen Vorgang (100) die Grundplatte (1) mit mindestens einer ausgehöhlten Lagerung zur Aufnahme einer Zwischenverzierungsschicht aus einem anderen farbigen Material als dem Material der Grundplatte (1) gefertigt wird.

9. Verfahren nach Anspruch 3, und nach einem der Ansprüche 1 bis 8, **dadurch gekennzeichnet, dass** beim Bearbeitungsschritt (320) in der ersten Schicht (2) mindestens eine ausgehöhlte Lagerung zur Aufnahme mindestens eines Dekorelements (3) oder zur Aufnahme einer Zwischenverzierungsschicht aus einem anderen farbigen Material als dem Material der Grundplatte (1) und/oder dem Material der ersten Schicht (2) gefertigt wird.

10. Verfahren nach Anspruch 8 oder 9, **dadurch gekennzeichnet, dass** zwischen dem ersten Abdeckungsvorgang (300) und dem zweiten Abdeckungsvorgang (500) mindestens ein Zwischenabdeckungsvorgang durchgeführt wird, bei dem in mindestens einer Lagerung eine Zwischenverzierung aus einem anderen farbigen Material als dem Material der Grundplatte (1) und/oder dem Material der ersten Schicht (2) abgelegt oder angebracht wird.

11. Verfahren nach Anspruch 10, **dadurch gekennzeichnet, dass** der Zwischenabdeckungsvorgang durch Hinterlegung einer Zwischenschicht des farbigen Materials durchgeführt wird, und dadurch, dass danach ein Bearbeitungsvorgang und/oder Poliervorgang vorgenommen wird, um die Zwischenschicht nur im Bereich einer jeden Lagerung, in der Zwischenschicht hinterlegt ist, zu begrenzen.

12. Verfahren nach einem der Ansprüche 1 bis 11, **dadurch gekennzeichnet, dass** ein Acryllack oder Epoxidlack als Material der zweiten Schicht (4) ausgewählt wird.

13. Verfahren nach einem der Ansprüche 1 bis 12, **dadurch gekennzeichnet, dass** bei dem anfänglichen Vorgang (100) das Substrat aus Perlmutt ausgewählt wird.

14. Verfahren nach einem der Ansprüche 1 bis 12, **dadurch gekennzeichnet, dass** bei dem anfänglichen Vorgang (100) das Substrat aus Keramik ausgewählt wird.

15. Verfahren nach einem der Ansprüche 1 bis 14, **dadurch gekennzeichnet, dass** die Komponente eines Uhrwerks hergestellt wird, um ein Element einer Ausstattung oder eines Zifferblatts zu bilden.

16. Uhr (1000), die mindestens eine Komponente eines Uhrwerks beinhaltet, die durch das Verfahren nach einem der Ansprüche 1 bis 15 gefertigt wird.

## Claims

1. Method for fabricating a composite timepiece or jewellery component comprising at least one decoration affixed to a substrate which has at least one apparent surface intended to remain visible, said method comprising the following operations in this order:
- in an initial operation (100), making a base (1) in a substrate which has at least one apparent surface (11) intended to remain visible;
- in a first polishing operation (200), mirror polishing each said apparent surface (11) intended to be seen by the user;
- performing a first coating operation (300) wherein each said polished apparent surface (11) comprised in said base (1) is coated with a deposition of a first transparent or coloured semi-transparent layer (2) of a first material (5) in a dry process, or PVD or CVD or ALD process, or lacquering or zapon varnish process.
- performing a first transfer operation (400) of affixing and bonding at least one decorative element (3) on a first external surface (21) comprised in said first layer (2);
- performing a second coating operation (500) wherein said first layer (2) and each said decorative element (3) carried by said first layer (2) is coated with a deposition of a second layer (4) of a transparent treatment material in a dry process, or PVD or CVD or ALD process, or lacquering or zapon varnish process, said method for fabricating being **characterized in that** when said initial operation (100), at least one apparent surface (11) is made with a warped surface having a particular curved shape, and **in that**, before performing said first transfer operation (400), a warped sacrificial support is made, which corresponds to said particular curved shape on which at least one said decorative element (3) is affixed with an adhesive fastening.

2. Method according to claim 1, **characterized in that**, after said second coating operation (500), in a final machining operation (600), geometric alignment is performed on said second layer (4) and/or a polishing operation is performed on said second external surface (41) comprised in said second layer (4).

3. Method according to claim 1 or 2, **characterized in that**, after said first coating operation (300), an intermediate machining operation (320) is performed wherein geometric alignment is performed on said first layer (2) and/or a polishing operation is performed on the first external surface (21) of said first layer (2).

4. Method according to any of claims 1 to 3, **characterized in that**, after the execution of said second coating operation (500), a transfer operation (350) is performed, during which at least one marking (5) is applied by pad printing to said first external surface (21) of said first layer (2).

5. Method according to claim 3 and according to any of claims 1 to 4, **characterized in that**, during said intermediate machining operation (320), at least one portion of said first external surface (21) comprised in said first layer (2) is made with a warped surface having a particular curved shape, and **in that**, after performing said first transfer operation (400), a warped sacrificial support is made, which corresponds to said particular curved shape on which at least one said decorative element (3) is affixed with an adhesive fastening.

6. Method according to claim 1 to 6, **characterized in that**, during said initial operation (100), said base (1) is made with marker elements, and **in that** said warped sacrificial support is made with marker elements complementary to the marker elements of said base (1) for the exact relative positioning thereof prior to the bonding of each said decorative element (3) carried by said sacrificial support.

7. Method according to any of claims 1 to 6, **characterized in that**, during said initial operation (100) said base (1) is made with at least one machined receiving surface for receiving at least one said decorative element (3) or one marking (5).

8. Method according to any of claims 1 to 7, **characterized in that**, during said initial operation (100), said base (1) is made with at least one hollow housing for receiving an intermediate decorative layer in a coloured material different from the material of said base (1).

9. Method according to claim 3 and according to any of claims 1 to 8, **characterized in that**, during said intermediate machining operation (320), at least one hollow housing is made in said first layer (2) for receiving at least one said decorative element (3) or for receiving an intermediate decorative layer in a coloured material different from the material of said base (1) and/or the material of said first layer (2).

10. Method according to claim 8 or 9, **characterized in that**, between said first coating operation (300) and said second coating operation (500), at least one intermediate coating operation is performed during which there is deposited or affixed, in at least one said housing, an intermediate decoration in a coloured material different from the material of said base (1) and/or the material of said first layer (2).

11. Method according to claim 10, **characterized in that** said intermediate coating operation is performed by depositing an intermediate layer of said coloured material, and **in that** a machining and/or polishing operation is then performed to confine said intermediate layer to each said housing in which said intermediate layer is deposited.

12. Method according to any of claims 1 to 11, **characterized in that** an acrylic or epoxy varnish is chosen as the material of said second layer (4).

13. Method according to any of claims 1 to 12, **characterized in that**, during said initial operation (100) a mother-of-pearl substrate is chosen.

14. Method according to any of claims 1 to 12, **characterized in that**, during said initial operation (100) a ceramic substrate is chosen.

15. Method according to any of claims 1 to 14, **characterized in that** said timepiece component is fabricated to form an external element or a dial.

16. Watch (1000) comprising at least one timepiece component (100) made by the method according to any of claims 1 to 15.
